# EUROPÄISCHE PATENTSCHRIFT

(11) **EP 3 679 768 B1**
(45) Veröffentlichungstag und Bekanntmachung des Hinweises auf die Patenterteilung: **21.04.2021**
(21) Anmeldenummer: 18759865.1
(22) Anmeldetag: 09.08.2018
(51) Int. Cl.: H05B 45/50, H05B 39/04

(54) **DIMMERSYSTEM**
DIMMER SYSTEM
SYSTÈME GRADATEUR DE LUMIÈRE

(30) Priorität: 06.09.2017 DE 102017215643
(43) Veröffentlichungstag der Anmeldung: 15.07.2020
(73) Patentinhaber: Siemens Schweiz AG, 8047 Zürich (CH)
(72) Erfinder: MENSCH, Johann, 93055 Regensburg (DE); REISLHUBER, Jakob, 93099 Mötzing (DE)
(74) Vertreter: Maier, Daniel Oliver
(86) Internationale Anmeldenummer: PCT/EP2018/071632
(87) Internationale Veröffentlichungsnummer: WO 2019/048175

(56) Entgegenhaltungen:
- DE-B3-102016 209 278

## Beschreibung

Die Erfindung betrifft ein Dimmersystem zur Steuerung der Leistungsaufnahme einer an einem Dimmersystem anschliessbaren Last, insbesondere einer LED-Leuchte, wobei das Dimmersystem mindestens zwei parallel geschaltete galvanisch getrennte Dimmkanäle umfasst. Weiterhin betrifft die Erfindung ein Verfahren zur Steuerung der Leistungsaufnahme einer an einem Dimmersystem anschliessbaren Last.

Dimmer beziehungsweise Dimmvorrichtungen oder Dimmersysteme zur Helligkeitssteuerung sind allgemein bekannt und sie dienen dazu, die Leistung einer Leuchteinrichtung zu variieren. Eine solche Leistungsvariation kann durch Phasenanschnittsteuerung oder Phasenabschnittsteuerung erfolgen. Bei der Phasenanschnittsteuerung wird der Strom verzögert nach dem Nulldurchgang der Wechselspannung eingeschaltet und fließt bis zum nächsten Stromnulldurchgang. Bei der Phasenabschnittsteuerung hingegen wird der Strom nach dem Nulldurchgang sofort eingeschaltet und vor dem nächsten Nulldurchgang wieder ausgeschaltet.

Die deutsche Patentschrift DE102016209278B3 offenbart ein Dimmersystem zur Steuerung der Leistungsaufnahme einer anschliessbaren Last, mit einer Master-Steuereinrichtung und mit mindestens zwei Slave-Dimmern, wobei die Master-Steuereinrichtung Synchronisationssignale zur Synchronisierung der jeweiligen Ausgänge der Slave-Dimmer über eine geeignete Kommunikationsverbindung an die jeweiligen Slave-Dimmer ausgibt; wobei jeder Slave-Dimmer eine Slave-Steuereinrichtung aufweist, welche die Synchronisationssignale von der Master-Steuereinrichtung empfängt; wobei die Slave-Dimmer parallel geschaltet sind, um einen gemeinsamen gesteuerten Ausgang für die anschliessbare Last bereitzustellen; wobei die Master-Steuereinrichtung das Synchronisationssignal gleichzeitig an die Slave-Steuereinrichtungen sendet; wobei jede Slave-Steuereinrichtung dazu eingerichtet ist, die Zeit zwischen dem empfangenen Synchronisationssignal und dem jeweils erkannten Netzspannungsnulldurchgang zu messen und diese Zeit an die Master-Steuereinrichtung zu melden; wobei die Master-Steuereinrichtung dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung an die jeweiligen Slave-Steuereinrichtungen zur Korrektur der Ansteuerung des Ausgangs durch den jeweiligen Slave-Dimmer auszugeben.

Insbesondere durch die Verbreitung der LED-Technologie sind sogenannte Mehrkanaldimmersysteme bekannt, bei denen ein Master-Dimmer mehrere Leistungsstufen (Slave-Dimmer, Kanäle) aufweist, die ausgangsseitig für eine Leistungssteigerung parallelschaltbar sind. Bei diesen leistungsstarken Dimmern werden mehrere physikalische Kanäle (Slaves) parallel geschaltet und es entsteht ein leistungsstarker logischer Kanal. Bei dieser Parallelschaltung ist es sehr wichtig, dass die Ausgänge gleichzeitig schalten. Wenn zwei Kanäle parallel geschaltet wurden und der 2. Kanal zu spät (bei Phasenanschnitt) oder zu früh (bei Phasenabschnitt) schaltet, wird der erste Kanal überlastet. Dies führt zu einer übermäßigen Erwärmung und dann zum Derating oder Abschalten des logischen Kanals, wobei in diesem Fall beide physikalischen Kanäle betroffen sind. Ein möglicherweise erforderlicher Geräteaustausch verursacht Kosten und Störungen beim Kunden.

Es ist daher die Aufgabe der vorliegenden Erfindung ein wartungsarmes und leistungsfähiges Dimmersystem zur phasensynchronen Schaltung mehrerer paralleler Dimmkanäle bereitzustellen.

Die Aufgabe wird gelöst durch ein Dimmersystem zur Steuerung der Leistungsaufnahme einer anschliessbaren Last, insbesondere einer LED-Leuchte, mit mindestens zwei parallel geschalteten galvanisch getrennten Dimmkanälen, wobei jeder Dimmkanal eine Vorrichtung zur Temperaturüberwachung seiner Schaltelemente umfasst, und wobei jeder Dimmkanal eine Steuereinheit zur Verschiebung seiner Dimmflanke, basierend auf der Temperatur seiner Schaltelemente, umfasst, um die Verlustleistung der angeschlossenen Last im wesentlichen gleichmässig auf die Dimmkanäle zu verteilen. Dadurch wird die Dimmbarkeit von großen Lasten im parallelen Betrieb verbessert. Die Anzahl der Kanäle die parallel geschaltet werden können vergrößert sich, was wiederum dazu führt, dass noch größere Lasten unterstützt werden können. Das Dimmersystem wird dadurch vielseitiger einsetzbar. So ist es möglich, in Abhängigkeit der jeweils vorliegenden Anforderungen an das Beleuchtungssystem und der dazu jeweils erforderlichen Last, ein skalierbares Dimmersystem bereitzustellen. Mit Vorteil weist das Dimmersystem Anschlussklemmen zur Ankopplung an einen Installationsbus (z.B. KNX-Bussystem) auf.

Eine erste vorteilhafte Ausgestaltung der Erfindung liegt darin, dass durch die Steuereinheit des jeweiligen Dimmkanals in Abhängigkeit der Temperatur der jeweiligen Schaltelemente, die jeweilige Dimmflanke des jeweiligen Dimmkanals zeitlich nach vorne oder nach hinten verschoben wird. Jeder Dimmkanal weist dazu eine Vorrichtung auf (z.B. einen Temperatursensor, der ein elektrisches Signal in Abhängigkeit der erfassten Temperatur bereitstellt) mit der er in der Lage ist die Temperatur seiner Schaltelemente zu überwachen. Steigt die Temperatur am Schaltelement kann davon ausgegangen werden, dass der Kanal zu früh einschaltet (Phasenanschnittbetrieb) oder zu spät abschaltet (Phasenabschnittbetrieb). Daraufhin wird die Dimmflanke von der Steuereinheit in geeigneten Schritten zeitlich nach vorne (Phasenabschnitt) oder nach hinten (Phasenanschnittbetrieb) bis die Temperatur am Schaltelement nicht mehr so schnell steigt, stagniert oder sogar niedriger wird, abhängig davon in welchem Temperaturbereich man sich befindet.

Eine weitere vorteilhafte Ausgestaltung der Erfindung liegt darin, dass die zeitliche Verschiebung der jeweiligen Dimmflanke nach vorne oder nach hinten solange erfolgt, bis der Gradient der Temperatur der jeweiligen Schaltelemente sich verringert. Der Gradient der Temperatur ist ein Mass für die Intensivität bzw. Stärke der Temperaturveränderung. Der Gradient der Temperatur zeigt somit an, ob eine Dimmflankenverschiebung erfolgreich ist bzw. erfolgreich wird.

Eine weitere vorteilhafte Ausgestaltung der Erfindung liegt darin, dass die zeitliche Verschiebung der jeweiligen Dimmflanke nach vorne oder nach hinten solange erfolgt, bis die Temperatur der jeweiligen Schaltelemente stagniert. Eine Stagnation der Temperatur der jeweiligen Schaltelemente ist ein Hinweis, dass die zeitliche Verschiebung der jeweiligen Dimmflanke erfolgreich ist, denn es erfolgt keine Temperaturerhöhung mehr.

Eine weitere vorteilhafte Ausgestaltung der Erfindung liegt darin, dass die zeitliche Verschiebung der jeweiligen Dimmflanke nach vorne oder nach hinten solange erfolgt, bis sich die Temperatur der jeweiligen Schaltelemente verringert. Auch eine Verringerung der Temperatur der jeweiligen Schaltelemente ist ein Hinweis, dass die zeitliche Verschiebung der jeweiligen Dimmflanke erfolgreich ist.

Eine weitere vorteilhafte Ausgestaltung der Erfindung liegt darin, dass das Dimmersystem eine Mastersteuereinheit umfasst, die datentechnisch mit den Steuereinheiten der Dimmkanäle verbunden ist, wobei die Mastersteuereinheit an die Steuereinheiten der Dimmkanäle einen Sollwert vorgibt, wobei die jeweilige Verschiebung der Dimmflanken auf dem Sollwert basiert. Im Allgemeinen weisen die parallelen galvanisch getrennten Dimm-kanäle jeweils eigene Schaltungen zur Phasensynchronisation auf. Durch Bauteiletoleranzen oder durch Alterung der Bauteile können aber zeitliche Unterschiede bei der Nulldurchgangserkennung entstehen. Diese zeitlichen Unterschiede führen dann zu einem nicht synchronen Schalten der Dimmkanäle. Mit Vorteil werden die Dimmkanäle bzw. die jeweiligen Steuereinheiten der Dimmkanäle durch eine Mastersteuereinheit des Dimmersystems angesteuert. Die Mastersteuereinheit kennt die Temperaturwerte in den jeweiligen Dimmkanälen und ermittelt basierend auf den Temperaturwerten entsprechende Sollwerte zur Phasenverschiebung. Mit Vorteil gibt die Mastersteuereinheit für einen jeweiligen Dimmkanal einen dedizierten Sollwert vor.

Eine weitere vorteilhafte Ausgestaltung der Erfindung liegt darin, dass der Sollwert auf der Temperatur der im Dimmersystem verbauten Schaltelemente basiert. Die Temperatur der verbauten Schaltelemente lässt sich leicht bestimmen, z.B. durch Halbleiter-Temperatursensoren oder durch Thermistoren (NTC, PTC) .

Eine weitere vorteilhafte Ausgestaltung der Erfindung liegt darin, dass die Dimmkanäle auf einem gemeinsamen Kühlmittel bzw. Kühlkörper, insbesondere einem Kühlblech, angeordnet sind. Die Kühlleistung des für alle Dimmkanäle gemeinsamen Kühlmittels bzw. Kühlkörpers ist flexibel zur Abfuhr bzw. Ableitung der Verlustwärme der jeweils eingesetzten Dimmkanäle verwendbar. Eine Skalierung der Anzahl der eingesetzten Dimmkanäle ist somit mit einem gemeinsamen Kühlmittel bzw. Kühlkörper möglich.

Die Aufgabe wird weiterhin gelöst durch ein Verfahren zur Steuerung der Leistungsaufnahme einer an einem Dimmersystem anschliessbaren Last, insbesondere einer LED-Leuchte, wobei das Dimmersystem mindestens zwei parallel geschaltete galvanisch getrennte Dimmkanäle umfasst, wobei basierend auf der Temperatur der Schaltelemente des jeweiligen Dimmkanals eine Verschiebung der Dimmflanke des jeweiligen Dimmkanals erfolgt, um die Verlustleistung der angeschlossenen Last im wesentlichen gleichmässig auf die Dimmkanäle zu verteilen. Das erfindungsgemässe Verfahren ermöglicht in einem Dimmersystem eine einfache Art der gleichmässigen Verteilung der Verlustleistung einer angeschlossenen Last auf die verwendeten Dimmkanäle. Die Temperatur der Schaltelemente kann z.B. durch digitale Temperatursensoren bzw. durch Halbleitersensoren bestimmt werden.

Eine weitere vorteilhafte Ausgestaltung der Erfindung liegt darin, dass in Abhängigkeit der Temperatur der jeweiligen Schaltelemente, die jeweilige Dimmflanke des jeweiligen Dimmkanals zeitlich nach vorne oder nach hinten verschoben wird. Dadurch erfolgt eine Synchronisation der Dimmkanäle. Insbesondere die jeweiligen Dimmkanal-spezifischen Nulldurchgänge werden synchronisiert.

Die Erfindung sowie vorteilhafte Ausführungen der vorliegenden Erfindung werden am Beispiel der nachfolgenden Figuren erläutert. Dabei zeigen:
- FIG 1: eine beispielhafte Anordnung für ein Dimmersystem mit mehreren parallel geschalteten galvanisch getrennten Dimmkanälen,
- FIG 2: eine beispielhafte Phasenverschiebung für den Phasenanschnitt,
- FIG 3: eine beispielhafte Phasenverschiebung für den Phasenabschnitt, und
- FIG 4: ein beispielhaftes Ablaufdiagramm zur Durchführung des erfindungsgemässen Verfahrens.

Auf dem Markt für Beleuchtungsmittel ist die LED-Technologie auf dem Vormarsch dadurch sind die Leistungsanforderungen an Dimmkanäle zurückgegangen. Es wird versucht in der gleichen Baugröße mehrere Kanäle unterzubringen die zwar weniger Leistung unterstützen dadurch aber eine höhere Flexibilität zur Verfügung stellen und für LED-Lampen optimiert sind. Sollte nun doch einmal eine Last mit größerer Leistung betrieben werden (z.B. Kronleuchter mit Glühbirnen), dann können zu diesem Zwecke mehrere Kanäle zu einem Leistungsfähigeren logischen Kanal parallel geschaltet werden. Dies hat zur Folge, dass sich der Laststrom auf die parallel geschalteten Kanäle aufteilt und sich damit die Verlustleistung gleichmäßig verteilt. Dies funktioniert jedoch nur wenn alle Kanäle zum gleichen Zeitpunkt einschalten bzw. abschalten. Ist dies nicht der Fall erhöht sich der Strom bei einem oder mehreren Kanälen und diese können überlastet werden und abschalten. Je mehr Kanäle zusammen geschaltet werden sollen, desto größer wird dieses Problem. Mit dem erfindungsgemässen Dimmersystem wird diese Problematik verhindert bzw. vermindert.

Dimmer beziehungsweise Dimmvorrichtungen dienen dazu, die Leistung einer Beleuchtungsvorrichtung zu variieren. Eine solche Leistungsvariation kann durch Phasenanschnittsteuerung oder Phasenabschnittsteuerung erfolgen. Bei der Phasenanschnittsteuerung wird der Strom verzögert nach dem Nulldurchgang der Wechselspannung eingeschaltet und fließt bis zum nächsten Nulldurchgang. Bei der Phasenabschnittsteuerung hingegen wird der Strom nach dem Nulldurchgang sofort eingeschaltet und vor dem nächsten Nulldurchgang wieder ausgeschaltet.

Herkömmliche einfache Dimmer besitzen meist eine Triac-Endstufe und arbeiten im Phasenanschnittbetrieb. Triacs schalten bidirektional und löschen im Stromnulldurchgang. Mit dem gezündeten Triac wird die Eingangsspannung der Beleuchtungs-vorrichtung (z.B. LED-Lampe) auf den aktuellen Wert der Netzspannung geklemmt, sodass keine über der aktuellen Netzspannung liegende Spannung an der Beleuchtungsvorrichtung (z.B. LED-Lampe) verbleibt. Da ein Triac im stromlosen Zustand löscht, wird keine spezielle Schaltung für die Detektion des Stromnulldurchgangs erforderlich.

Darüber hinaus gibt es sogenannte Universaldimmer, die bei antiseriell geschalteten Transistoren (meist MOSFET) beide MOSFET ansteuern und damit einen bidirektionalen Schalter bilden, der die Eingangsspannung der Beleuchtungsvorrichtung (z.B. LED-Lampe) an die aktuelle Netzspannung klemmt. MOSFETs löschen jedoch nicht wie Triacs im Stromnulldurchgang. Der Stromnulldurchgang muss bei diesen Dimmern beispielsweise aufwendig über eine Strommessung bestimmt werden.

LED-Lampen als Beleuchtungsvorrichtungen sind somit mittels Phasenanschnitt oder Phasenabschnitt dimmbar. Mit sogenannten Universaldimmern ist sowohl der Phasenanschnitt als auch der Phasenabschnitt zum Dimmen solcher dimmbaren LED-Lampen (LED-Chip plus Vorschaltgerät) möglich.

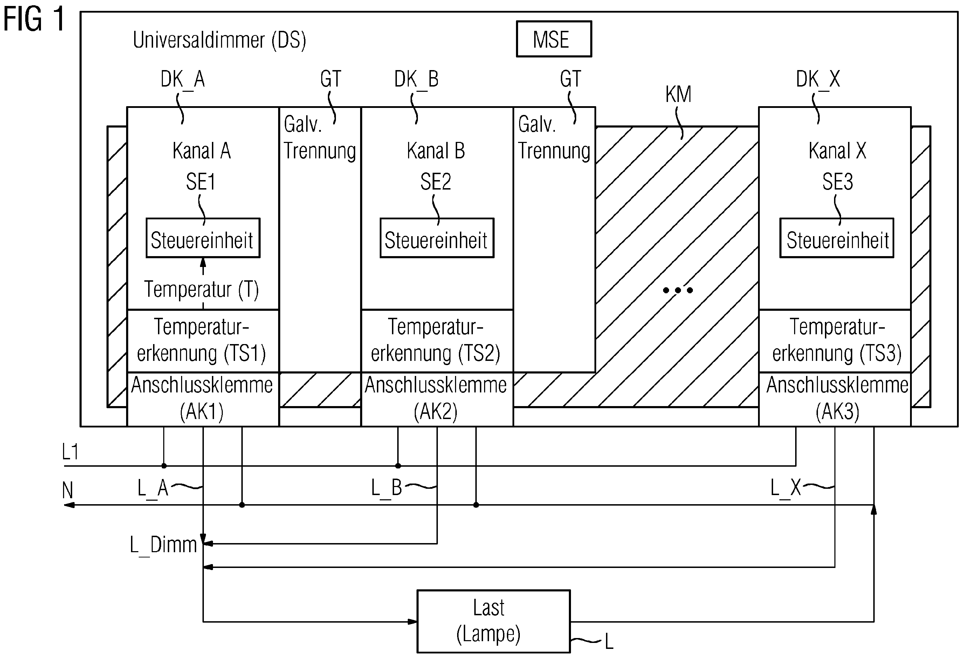

Figur 1 zeigt eine beispielhafte Anordnung für ein Dimmer-system DS (z.B. ein Universaldimmer) zur Steuerung der Leistungsaufnahme einer anschliessbaren Last L (z.B. eine Beleuchtungsvorrichtung), insbesondere einer LED-Leuchte, mit mindestens zwei parallel geschalteten galvanisch getrennten Dimmkanälen DK_A, DK_B, DK_X, wobei jeder Dimmkanal DK_A, DK_B, DK_X eine Vorrichtung zur Temperaturüberwachung TS1 - TS3 seiner Schaltelemente (z.B. Bauteile, Transistoren, Kabel) umfasst, und wobei jeder Dimmkanal DK_A, DK_B, DK_X eine Steuereinheit SE1 - SE3 zur Verschiebung seiner Dimmflanke, basierend auf der Temperatur T seiner Schaltelemente, umfasst, um die Verlustleistung der angeschlossenen Last L im wesentlichen gleichmässig auf die Dimmkanäle DK_A, DK B, DK_X zu verteilen. Die Dimmkanäle DK_A, DK_B, DK_X sind jeweils untereinander galvanisch getrennt (GT) bzw. galvanisch entkoppelt. Die Temperaturüberwachung kann z.B. durch Halbleiter-Temperatur-sensoren erfolgen.

Mit Vorteil ist eine Steuereinheit SE1 - SE3 eines Dimmkanals DK_A, DK_B, DK_X ausgebildet zum Bestimmen eines Stromnulldurchgangs für eine Phasenanschnittsteuerung bzw. Phasenabschnittsteuerung (z.B. anhand der gemessenen Spannung). Mit Vorteil ist eine Steuereinheit SE1 - SE3 durch eine integrierte Schaltung (z.B. IC, Mikrochip) realisiert.

Mit Vorteil wird durch die Steuereinheit SE1 - SE3 des jeweiligen Dimmkanals DK_A, DK_B, DK_X in Abhängigkeit der Temperatur (T) der jeweiligen Schaltelemente (z.B. Bauteile, Schaltungen, Verbindungen), die jeweilige Dimmflanke des jeweiligen Dimmkanals DK_A, DK_B, DK_X zeitlich nach vorne oder nach hinten verschoben, um die Verlustleistung der angeschlossenen Last L (z.B. Beleuchtungsvorrichtung) im wesentlichen gleichmässig auf die Dimmkanäle DK_A, DK_B, DK_X zu verteilen.

Mit Vorteil weist das Dimmersystem DS eine Mastersteuereinheit MSE (z.B. ein Mikrocomputer oder ein Mikrochip) auf, die datentechnisch mit den Steuereinheiten SE1 - SE3 der jeweiligen Dimmkanäle DK_A, DK B, DK_X verbunden ist, wobei die Mastersteuereinheit MSE an die Steuereinheiten SE1 - SE3 der jeweiligen Dimmkanäle DK_A, DK_B, DK_X einen Sollwert vorgibt, wobei die jeweilige Verschiebung der Dimmflanken auf dem Sollwert basiert. Der Sollwert kann z.B. durch Auswertung der in den Dimmkanälen DK_A, DK_B, DK_X gemessenen Temperatur T bestimmt werden. Der Sollwert kann z.B. auf der Temperatur T der im Dimmersystem verbauten Schaltelemente basieren.

Mit Vorteil sind die Dimmkanäle DK_A, DK_B, DK_X auf einem gemeinsamen Kühlmittel KM, insbesondere einem Kühlblech oder Kühlkörper, angeordnet. Das gemeinsame Kühlmittel KM nimmt die Verlustwärme der Dimmkanäle DK_A, DK_B, DK_X auf. Dadurch wird eine Überhitzung der Dimmkanäle und des Dimmersystems vermieden.

Die jeweiligen Dimmkanäle DK_A, DK_B, DK_X weisen geeignete Anschlussklemmen AK1 - AK3 zum Anschliessen von Phasenleiter L1, Neutralleiter N, bzw. der jeweiligen Lastausgangs-Kanäle L_A, L_B, L_X auf. Die Lastausgangs-Kanäle L_A, L_B, L_X der jeweiligen Dimmkanäle DK_A, DK_B, DK_X werden ausgangsseitig parallel zusammengeschaltet zum Kanal L_Dimm zum Anschalten bzw. Ansteuern der Last L (z.B. LED-Lampe bzw. Gruppe von LED-Lampen). Über Phasenleiter L1 und Neutralleiter N erfolgt der Anschluss an eine Versorgungsspannung, z.B. eine Netzspannung.

Der Kanal L_Dimm (Ausgang zum Anschalten der Last) stellt somit einen steuerbaren Lastpfad für die Last (z.B. Lampe) dar.

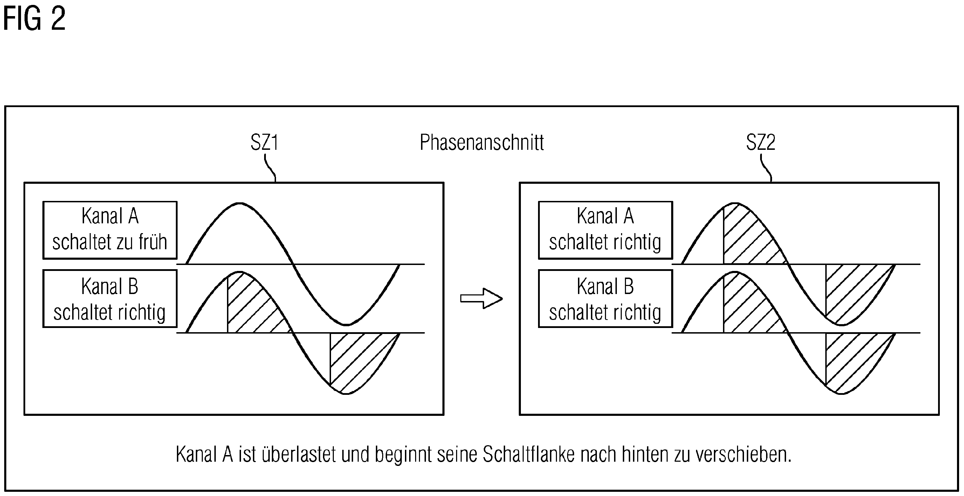

Figur 2 zeigt eine beispielhafte Phasenverschiebung für den Phasenanschnitt. Für jeden Dimmkanal (Kanal A, Kanal B) ist eine Kurve einer Netzspannung beziehungsweise Versorgungswechselspannung als Sinuswelle dargestellt. Beim Phasenanschnittsbetrieb wird in jeder Netzhalbwelle die Last nach einer bestimmten Verzögerungszeit ab dem vorausgegangenen Stromnulldurchgang angesteuert. Jeder Dimmkanal (Kanal A, Kanal B) hat eine Vorrichtung mit der er in der Lage ist die Temperatur seiner Schaltelemente zu überwachen. Steigt die Temperatur am Schaltelement kann davon ausgegangen werden, dass der Kanal zu früh einschaltet. Im linken Szenario SZ1 der beispielhaften Darstellung gemäss Figur 2 schaltet Kanal A zu früh. Dies wird von der Steuereinheit des Kanals A erkannt (z.B. durch entsprechende Temperaturüberwachung). Die Steuereinheit von Dimmkanal A veranlasst in Abhängigkeit der Temperatur der jeweiligen Schaltelemente von Dimmkanal A, die Dimmflanke von Kanal A zeitlich nach hinten (d.h. in der Darstellung gemäss Figur 2 nach rechts) zu verschieben (siehe Szenario SZ2 der beispielhaften Darstellung gemäss Figur 2). Im Szenario SZ2 der beispielhaften Darstellung gemäss Figur 2 schalten Kanal A und Kanal B wieder synchron.

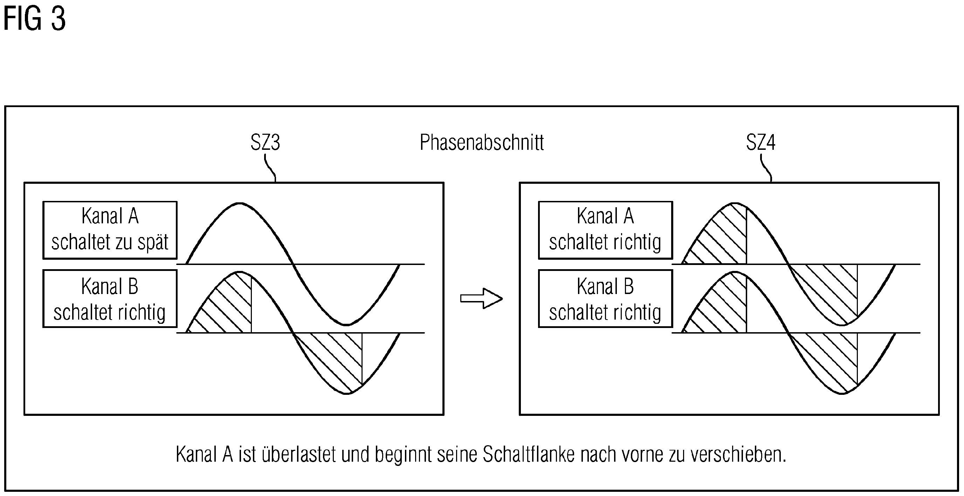

Figur 3 zeigt eine beispielhafte Phasenverschiebung für den Phasenabschnitt. Für jeden Dimmkanal (Kanal A, Kanal B) ist eine Kurve einer Netzspannung beziehungsweise Versorgungswechselspannung als Sinuswelle dargestellt. Beim Phasenabschnittsbetrieb wird in jeder Halbwelle die Last im

Netzspannungsnulldurchgang eingeschaltet und nach einer bestimmten Verzögerung wieder ausgeschaltet. Jeder Dimmkanal (Kanal A, Kanal B) hat eine Vorrichtung mit der er in der Lage ist die Temperatur seiner Schaltelemente zu überwachen. Steigt die Temperatur am Schaltelement kann davon ausgegangen werden, dass der Kanal zu spät einschaltet. Im linken Szenario SZ3 der beispielhaften Darstellung gemäss Figur 3 schaltet Kanal A zu spät. Dies wird von der Steuereinheit des Kanals A erkannt (z.B. durch entsprechende Temperaturüberwachung). Die Steuereinheit von Dimmkanal A veranlasst in Abhängigkeit der Temperatur der jeweiligen Schaltelemente von Dimmkanal A, die Dimmflanke von Kanal A zeitlich nach vorne (d.h. in der Darstellung gemäss Figur 3 nach links) zu verschieben (siehe Szenario SZ4 der beispielhaften Darstellung gemäss Figur 3). Im Szenario SZ4 der beispielhaften Darstellung gemäss Figur 3 schalten Kanal A und Kanal B wieder synchron.

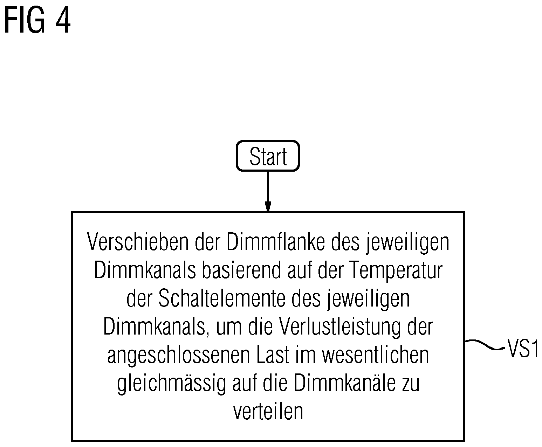

Figur 4 zeigt ein beispielhaftes Ablaufdiagramm zur Durchführung des erfindungsgemässen Verfahrens zur Steuerung der Leistungsaufnahme einer an einem Dimmersystem anschliessbaren Last, insbesondere einer LED-Leuchte, wobei das Dimmersystem (DS) mindestens zwei parallel geschaltete galvanisch getrennte Dimmkanäle umfasst, (VS1) wobei basierend auf der Temperatur der Schaltelemente des jeweiligen Dimmkanals eine Verschiebung der Dimmflanke des jeweiligen Dimmkanals erfolgt, um die Verlustleistung der angeschlossenen Last im wesentlichen gleichmässig auf die Dimmkanäle zu verteilen.

Mit Vorteil wird in Abhängigkeit der Temperatur der jeweiligen Schaltelemente, die jeweilige Dimmflanke des jeweiligen Dimmkanals zeitlich nach vorne oder nach hinten verschoben wird.

Mit Vorteil erfolgt die zeitliche Verschiebung der jeweiligen Dimmflanke nach vorne oder nach hinten solange, bis der Gradient der Temperatur der jeweiligen Schaltelemente sich verringert.

Mit Vorteil erfolgt die zeitliche Verschiebung der jeweiligen Dimmflanke nach vorne oder nach hinten solange erfolgt, bis die Temperatur der jeweiligen Schaltelemente stagniert.

Mit Vorteil erfolgt die zeitliche Verschiebung der jeweiligen Dimmflanke nach vorne oder nach hinten solange erfolgt, bis sich die Temperatur der jeweiligen Schaltelemente verringert.

Das Verfahren ist mit handelsüblichen Bauteilen (z.B. Halbleiter-Temperatursensoren) bzw. mit Bauteilen (z.B. Transistoren, Schaltelementen), die ein Dimmersystem sowieso aufweist, realisierbar.

Dimmersystem und Verfahren zur Steuerung der Leistungsaufnahme einer an einem Dimmersystem anschliessbaren Last, insbesondere einer LED-Leuchte, wobei das Dimmersystem mindestens zwei parallel geschaltete galvanisch getrennte Dimmkanäle umfasst, wobei basierend auf der Temperatur der Schaltelemente des jeweiligen Dimmkanals eine Verschiebung der Dimmflanke des jeweiligen Dimmkanals erfolgt, um die Verlustleistung der angeschlossenen Last im wesentlichen gleichmässig auf die Dimmkanäle zu verteilen.

### Bezugszeichen

- DS: Dimmersystem
- KM: Kühlmittel
- MSE: Mastersteuereinheit
- DK_A, DK_B, DK_X: Dimmkanal
- L: Last
- SE1- SE3: Steuereinheit
- T: Temperatur
- TS1 - TS3: Temperatursensor
- L1: Phasenleiter
- N: Neutralleiter
- L_A, L_B, L_X: Lastausgang-Kanal
- L_Dimm: Ausgang zum Anschalten der Last
- SZ1- SZ4: Szenario
- VS1: Verfahrensschritt

## Patentansprüche

1. Dimmersystem (DS) zur Steuerung der Leistungsaufnahme einer anschliessbaren Last (L), insbesondere einer LED-Leuchte, wobei das Dimmersystem mindestens zwei parallel geschaltete galvanisch getrennte Dimmkanäle aufweist (DK_A, DK_B, DK_X),
wobei jeder Dimmkanal (DK_A, DK_B, DK_X) eine Vorrichtung (TS1- TS3) zur Temperaturüberwachung seiner Schaltelemente umfasst, **dadurch gekennzeichnet, daß** jeder Dimmkanal (DK_A, DK_B, DK_X) eine Steuereinheit (SE - SE3) zur Verschiebung seiner Dimmflanke, basierend auf der Temperatur (T) seiner Schaltelemente, umfasst, um die Verlustleistung der angeschlossenen Last (L) im wesentlichen gleichmässig auf die Dimmkanäle (DK_A, DK_B, DK_X) zu verteilen,
wobei durch die Steuereinheit des jeweiligen Dimmkanals (DK_A, DK_B, DK_X) in Abhängigkeit der Temperatur der jeweiligen Schaltelemente, die jeweilige Dimmflanke des jeweiligen Dimmkanals (DK_A, DK_B, DK_X) zur Synchronisation der Dimmkanäle zeitlich nach vorne oder nach hinten verschoben wird.

2. Dimmersystem (DS) nach Anspruch 1, wobei die zeitliche Verschiebung der jeweiligen Dimmflanke nach vorne oder nach hinten solange erfolgt, bis der Gradient der Temperatur der jeweiligen Schaltelemente sich verringert.

3. Dimmersystem (DS) nach einem der vorstehenden Ansprüche, wobei die zeitliche Verschiebung der jeweiligen Dimmflanke nach vorne oder nach hinten solange erfolgt, bis die Temperatur der jeweiligen Schaltelemente stagniert.

4. Dimmersystem (DS) nach einem der vorstehenden Ansprüche, wobei die zeitliche Verschiebung der jeweiligen Dimmflanke nach vorne oder nach hinten solange erfolgt, bis sich die Temperatur der jeweiligen Schaltelemente verringert.

5. Dimmersystem (DS) nach einem der vorstehenden Ansprüche, weiter umfassend eine Mastersteuereinheit (MSE), die datentechnisch mit den Steuereinheiten der Dimmkanäle (DK_A, DK_B, DK_X) verbunden ist, wobei die Mastersteuereinheit (MSE) an die Steuereinheiten der Dimmkanäle (DK_A, DK B, DK_X) einen Sollwert vorgibt, wobei die jeweilige Verschiebung der Dimmflanken auf dem Sollwert basiert.

6. Dimmersystem (DS) nach Anspruch 5, wobei der Sollwert auf der Temperatur der im Dimmersystem verbauten Schaltelemente basiert.

7. Dimmersystem (DS) nach einem der vorstehenden Ansprüche, wobei die Dimmkanäle (DK_A, DK B, DK_X) auf einem gemeinsamen Kühlmittel (KM), insbesondere einem Kühlblech, angeordnet sind.

8. Verfahren zur Steuerung der Leistungsaufnahme einer an einem Dimmersystem (DS) anschliessbaren Last (L), insbesondere einer LED-Leuchte, wobei das Dimmersystem (DS) mindestens zwei parallel geschaltete galvanisch getrennte Dimmkanäle (DK_A, DK B, DK_X) umfasst, wobei jeder Dimmkanal (DA_A, DK_B, DK_X) eine Vorrichtung (TS1 - TS3) zur Temperaturüberwachung seiner Schaltelemente umfasst, **gekennzeichnet dadurch, daß** jeder Dimmkanal (DK_A, DK_B,DK_X) eine Steuereinheit (SE1 - SE3) zur Verschiebung seiner Dimmflanke umfasst,
wobei basierend auf der Temperatur der Schaltelemente des jeweiligen Dimmkanals (DK_A, DK_B, DK_X) eine Verschiebung der Dimmflanke des jeweiligen Dimmkanals (DK_A, DK_B, DK_X) erfolgt, um die Verlustleistung der angeschlossenen Last (L) im wesentlichen gleichmässig auf die Dimmkanäle (DK_A, DK_B, DK_X) zu verteilen,
wobei durch die Steuereinheit des jeweiligen Dimmkanals (DK_A, DK_B, DK_X) in Abhängigkeit der Temperatur der jeweiligen Schaltelemente, die jeweilige Dimmflanke des jeweiligen Dimmkanals (DK_A, DK_B, DK_X) zur Synchronisation der Dimmkanäle zeitlich nach vorne oder nach hinten verschoben wird.

## Claims

1. Dimmer system (DS) for controlling the power consumption of a load (L) that can be connected, in particular an LED lamp, wherein the dimmer system has at least two parallel-connected galvanically isolated dimming channels (DK_A, DK_B, DK_X),
wherein each dimming channel (DK_A, DK_B, DK_X) comprises a device (TS1 - TS3) for monitoring the temperature of its switch elements, **characterised in that**
each dimming channel (DK_A, DK_B, DK_X) comprises a control unit (SE1 - SE3) for shifting its dimming edge according to the temperature (T) of its switch elements, in order to distribute the power dissipation of the connected load (L) substantially equally to the dimming channels (DK_A, DK_B, DK_X),
wherein the respective dimming edge of the respective dimming channel (DK_A, DK_B, DK_X), for synchronisation of the dimming channels, is shifted forward or backward in time by the control unit of the respective dimming channel (DK_A, DK_B, DK_X) depending on the temperature of the respective switch elements.

2. Dimmer system (DS) according to claim 1, wherein the time shift of the respective dimming edge forward or backward takes place until the temperature gradient of the respective switch elements decreases.

3. Dimmer system (DS) according to one of the preceding claims, wherein the time shift of the respective dimming edge forward or backward takes place until the temperature of the respective switch elements stagnates.

4. Dimmer system (DS) according to one of the preceding claims, wherein the time shift of the respective dimming edge forward or backward takes place until the temperature of the respective switch elements decreases.

5. Dimmer system (DS) according to one of the preceding claims, further comprising a master switch unit (MSE), which is connected for data purposes to the control units of the dimming channels (DK_A, DK_B, DK_X), wherein the master control unit (MSE) specifies a target value to the control units of the dimming channels (DK_A, DK_B, DK_X), wherein the respective shift of the dimming edges is based on the target value.

6. Dimmer system (DS) according to claim 5, wherein the target value is based on the temperature of the switch elements incorporated in the dimmer system.

7. Dimmer system (DS) according to one of the preceding claims, wherein the dimming channels (DK_A, DK_B, DK_X) are arranged on a shared cooling means (KM), in particular a cooling plate.

8. Method for controlling the power consumption of a load (L) that can be connected to a dimmer system (DS), in particular an LED lamp, wherein the dimmer system (DS) comprises at least two parallel-connected galvanically isolated dimming channels (DK_A, DK_B, DK_X), wherein each dimming channel (DK_A, DK_B, DK_X) comprises a device (TS1 - TS3) for monitoring the temperature of its switch elements, **characterised in that** each dimming channel (DK_A, DK_B, DK_X) comprises a control unit (SE1 - SE3) for shifting its dimming edge,
wherein a shifting of the dimming edge of the respective dimming channel (DK_A, DK_B, DK_X) occurs according to the temperature of the switch elements of the respective dimming channel (DK_A, DK_B, DK_X), in order to distribute the power dissipation of the connected load (L) substantially equally to the dimming channels (DK_A, DK_B, DK_X),
wherein the respective dimming edge of the respective dimming channel (DK_A, DK_B, DK_X), for synchronisation of the dimming channels, is shifted forward or backward in time by the control unit of the respective dimming channel (DK_A, DK_B, DK_X) depending on the temperature of the respective switch elements.

## Revendications

1. Système gradateur de lumière (DS) pour commander la puissance absorbée d'une charge raccordable (L), et plus particulièrement d'une lampe LED, le système gradateur de lumière comportant au moins deux canaux de gradation montés en parallèles et séparés galvaniquement(DK_A, DK_B, DK_X), chaque canal de gradation (DK_A, DK_B, DK_X) comprenant un dispositif (TS1 - TS3) pour surveiller la température de ses éléments de commutation, **caractérisé en ce que** chaque canal de gradation (DK_A, DK_B, DK_X) comprend une unité de commande (SE1 - SE3) pour décaler son flanc de gradation sur la base de la température (T) de ses éléments de commutation pour répartir la dissipation de puissance de la charge raccordée (L) de manière sensiblement uniforme sur les canaux de gradation (DK_A, DK_B, DK_X), le flanc de gradation respective du canal de gradation respectif (DK_A, DK_B, DK_X) étant, pour synchroniser les canaux de gradation, décalée temporellement vers l'avant ou vers l'arrière par l'unité de commande du canal de gradation respectif (DK_A, DK_B, DK_X) en fonction de la température des éléments de commutation respectifs.

2. Système gradateur de lumière (DS) selon la revendication 1, le décalage temporel du flanc de gradation respective vers l'avant ou vers l'arrière se faisant jusqu'à ce que le gradient de la température des éléments de commutation respectifs se réduise.

3. Système gradateur de lumière (DS) selon l'une des revendications précédentes, le décalage temporel du flanc de gradation respective vers l'avant ou vers l'arrière se faisant jusqu'à ce que la température des éléments de commutation respectifs stagne.

4. Système gradateur de lumière (DS) selon l'une des revendications précédentes, le décalage temporel du flanc de gradation respective vers l'avant ou vers l'arrière se faisant jusqu'à ce que la température des éléments de commutation respectifs se réduise.

5. Système gradateur de lumière (DS) selon l'une des revendications précédentes, comprenant en outre une unité de commande maître (MSE) qui est reliée, en termes de données, avec les unités de commande des canaux de gradation (DK_A, DK_B, DK_X), l'unité de commande maître (MSE) spécifiant une valeur de consigne aux unités de commande des canaux de gradation (DK_A, DK_B, DK_X), le décalage respectif des flancs de gradation se basant sur la valeur de consigne.

6. Système gradateur de lumière (DS) selon la revendication 5, la valeur de consigne se basant sur la température des éléments de commutation montés dans le système gradateur de lumière.

7. Système gradateur de lumière (DS) selon l'une des revendications précédentes, les canaux de gradation (DK_A, DK_B, DK_X) étant agencés sur un moyen de refroidissement (KM) commun, et plus particulièrement sur une tôle de refroidissement.

8. Procédé de commande de la puissance absorbée d'une charge (L) pouvant être raccordée à un système gradateur de lumière (DS), et plus particulièrement d'une lampe LED, le système gradateur de lumière (DS) comportant au moins deux canaux de gradation montés en parallèles et séparés galvaniquement(DK _A, DK_B, DK_X), chaque canal de gradation (DK_A, DK_B, DK_X) comprenant un dispositif (TS1 - TS3) pour surveiller la température de ses éléments de commutation, **caractérisé en ce que** chaque canal de gradation (DK_A, DK_B, DK_X) comprend une unité de commande (SE1 - SE3) pour décaler son flanc de gradation,
sur la base de la température des éléments de commutation du canal de gradation respectif (DK_A, DK_B, DK_X) se produisant un décalage du flanc de gradation du canal de gradation respectif (DK_A, DK_B, DK_X) pour répartir la dissipation de puissance de la charge raccordée (L) de manière sensiblement uniforme sur les canaux de gradation (DK_A, DK_B, DK_X),
le flanc de gradation respective du canal de gradation respectif (DK_A, DK_B, DK_X) étant, pour synchroniser les canaux de gradation, décalée temporellement vers l'avant ou vers l'arrière par l'unité de commande du canal de gradation respectif (DK_A, DK_B, DK_X) en fonction de la température des éléments de commutation respectifs.
